# EUROPEAN PATENT SPECIFICATION

(11) **EP 2 880 948 B1**
(45) Date of publication and mention of the grant of the patent: **19.10.2016**
(21) Application number: 13825040.2
(22) Date of filing: 30.07.2013
(51) Int. Cl.: H04W 72/08, H04W 16/24, H04W 72/04, H04W 84/04, H04B 7/02, H04W 76/02, H04W 16/32, H04W 52/14, H04W 52/32, H04W 36/18, H04W 24/10, H04W 28/08, H04W 52/38, H04W 52/24, H04W 92/12, H04L 5/00

(54) **METHOD AND APPARATUS FOR USE IN A MOBILE COMMUNICATION NETWORK**
VERFAHREN UND VORRICHTUNG ZUR VERWENDUNG IN EINEM MOBILKOMMUNIKATIONSNETZWERK
PROCÉDÉ ET APPAREIL DESTINÉS À ÊTRE UTILISÉS DANS UN RÉSEAU DE COMMUNICATION MOBILE

(30) Priority: 03.08.2012 US 201261679321 P
(43) Date of publication of application: 10.06.2015
(73) Proprietor: Telefonaktiebolaget LM Ericsson (publ), 164 83 Stockholm (SE)
(72) Inventor: WANG, Yi-Pin Eric, Fremont, California 94539 (US); GRANT, Stephen, Pleasanton, California 94566 (US); RAMOS, Edgar, FI-02360 Espoo (FI); HÖGLUND, Andreas, S-170 62 Solna (SE); MIAO, Qingyu, Beijing 100094 (CN)
(74) Representative: Brann AB
(86) International application number: PCT/SE2013/050942
(87) International publication number: WO 2014/021772

(56) References cited:
- US-A1- 2010 216 470
- US-A1- 2011 249 619
- US-A1- 2011 312 319
- NTT DOCOMO ET AL: "Inter-cell Radio Resource Management for Heterogeneous Networks", 3GPP DRAFT; R1-093505 INTER-CELL RRM FOR HETEROGENEOUS NETWORK, 3RD GENERATION PARTNERSHIP PROJECT (3GPP), MOBILE COMPETENCE CENTRE ; 650, ROUTE DES LUCIOLES ; F-06921 SOPHIA-ANTIPOLIS CEDEX ; FRANCE, vol. RAN WG1, no. Shenzhen, China; 20090824 - 20090828, 18 August 2009 (2009-08-18), XP050597624, [retrieved on 2009-08-18]
- HUAWEI ET AL: "PUCCH Transmission Enhancement", 3GPP DRAFT; R1-121498, 3RD GENERATION PARTNERSHIP PROJECT (3GPP), MOBILE COMPETENCE CENTRE ; 650, ROUTE DES LUCIOLES ; F-06921 SOPHIA-ANTIPOLIS CEDEX ; FRANCE, vol. RAN WG1, no. Jeju, Korea; 20120326 - 20120330, 20 March 2012 (2012-03-20), XP050599777, [retrieved on 2012-03-20]
- HAITONG SUN ET AL.: 'Introducing heterogeneous networks in HSPA' COMMUNICATIONS (ICC), 2012 IEEE INTERNATIONAL CONFERENCE 10 June 2012, pages 6045 - 6050, XP032274522
- ROSE QINGYANG HU ET AL.: 'Mobile Association in a Heterogeneous Network' COMMUNICATIONS (ICC), 2010 IEEE INTERNATIONAL CONFERENCE 23 May 2010, PISCATAWAY, NJ, USA, pages 1 - 6, XP055179009

## Description

### TECHNICAL FIELD

The technology relates to radio communications and helps increase the coverage area of a low power node (LPN) in a heterogeneous network while maintaining good downlink performance for user equipment terminals (UEs).

### BACKGROUND

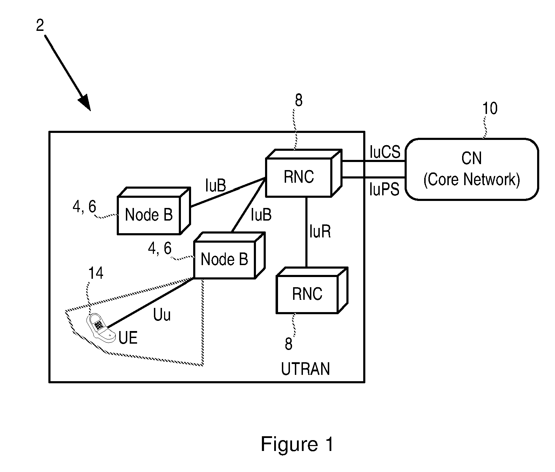

The technology in this application is described in a non-limiting example Universal Terrestrial Radio Access Network (UTRAN)/Wideband Code Division Multiple Access (WCDMA) network that supports High Speed Packet Access (HSPA). A basic example of an UTRAN/HSPA type of system 2 is illustrated in Figure 1. The network 2 comprises multiple radio base stations (known as NodeBs in WCDMA) 4, 6 that provide the radio interface (Uu interface in WCDMA) to mobile devices (known as user equipments, UEs, in WCDMA) 14. The NodeBs 4, 6 communicate with a network node, known as a radio network controller (RNC) 8 through an interface referred to as luB. The RNC 8 communicates with one or more core network nodes 10 which are connected to one or more other networks, e.g., the Internet, public and private telephone networks, etc.

A WCDMA/HSPA network supports a CELL_FACH state and a CELL_DCH state. CELL_FACH state is a connection state (or mode) for a UE in which only common radio resources are available to the UE for communication with the network, i.e., no dedicated radio resources are allocated to the UE. The CELL_DCH state is a connection state (or mode) for a UE in which dedicated radio resources have been allocated to the UE.

Heterogeneous networks are an efficient network deployment solution for satisfying the ever-increasing demand of mobile broadband services. In a heterogeneous network, a low-power or lower-power node (LPN), for example a picocell, microcell or femtocell base station, is placed in a traffic hot spot within the coverage area of a high-power or higher-power node, for example a macrocell base station, to better serve nearby UEs. Deploying a low power node in a traffic hot spot may significantly reduce the load in the macro or other higher-power cell serving the area. "Inter-cell Radio Resource Management for Heterogeneous Networks", 3GPP DRAFT; relates to inter-cell radio resource management for heterogeneous networks. US 2010/216470 A1 relates to asymmetric uplink/downlink connections in a mobile communication system. "Mobile Association in a Heterogeneous Network" relates to mobile association in a heterogeneous network.

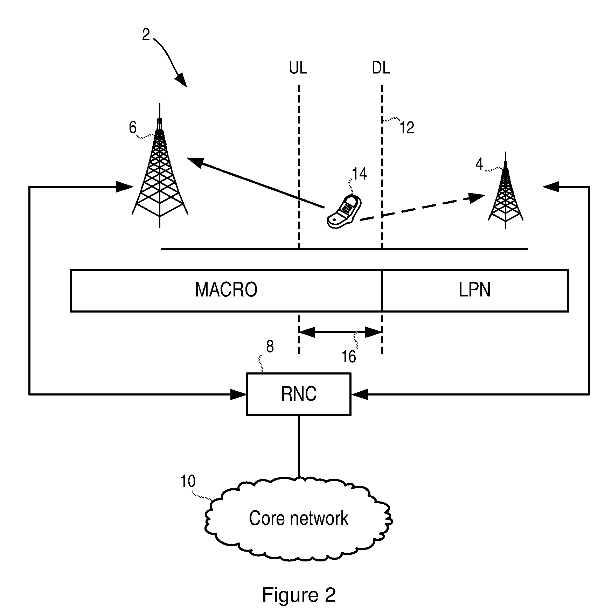

The traffic uptake of an LPN however may be somewhat limited due to a transmit power difference between a macro base station (BS) and the LPN. Figure 2 is an illustration of a communication network having an imbalanced region between two base stations. In Figure 2, the network 2 includes a low power node 4 (e.g., picocell or microcell base station) placed within the coverage area of a macrocell base station 6. Each of the LPN 4 and macrocell base station 6 are connected to a radio network controller (RNC) 8, which in turn connects to a core network 10. As downlink signal strength or quality is used as a basis for triggering a handover between base stations, the border 12 of the LPN cell is determined by the downlink (DL) signal strength or quality as measured by a mobile communications device 14 (also known as a user equipment - UE). The border 12 occurs at the point where the downlink signal strength or quality from the LPN 4 is the same as the downlink signal strength or quality from the macrocell base station 6. Because the LPN 4 has a much lower transmit power level compared to the macrocell base station 6, the cell border 12 is much closer to the LPN 4 than the macrocell base station 6.

But from the uplink (UL) perspective, the cell border should be somewhere near the equal-distance point between the two base stations 4, 6 since at the equal-distance point the path loss from the UE 14 to both base stations 4, 6 is approximately equal. The region 16 between the UL border and DL border 12 is referred to as the imbalanced region 16. In the imbalanced region, the UL from the UE 14 would generally be better served by the low-power node 4 (as it is closer to the UE 14 than the macrocell base station 6), but the DL to the UE 14 would be better served by the macrocell base station 6.

It is possible for a network operator to move the cell border 12 by employing or adjusting cell selection/reselection or mobility management related parameters. This is referred to as range extension. For example, in a Universal Mobile Telecommunications System (UMTS) 3G network, a cell individual offset (CIO) can be used to trigger certain measurement reports that help adjust the cell border for UEs that are in the CELL_DCH state. A CIO may be signaled in-band to a UE (thus, a CIO can be specified for each UE), and the UE uses the CIO to bias its mobility measurements, i.e., measurements of the DL signals from the LPN 4 and/or macrocell base station 6. For example, a UE 14 can make use of a weaker cell, i.e., LPN 4, when the UE 14 is in the imbalanced region 16 by applying a large CIO to the measured DL signal quality from the LPN 4. The signal quality can be either the common pilot channel (CPICH) received code power (RSCP) or CPICH energy per chip over noise power spectral density ratio (Ec/No).

Cell selection while the UE is in CELL_FACH state where the UE has no assigned dedicated radio resource may be based on CPICH RSCP or CPICH Ec/No measurements, and parameters labelled QOffset1sn (for CPICH RSCP measurements) and QOffset2sn (for CPICH Ec/No measurements) can be used to bias cell selection. Other cell selection priority parameters may be used to give a carrier or cell a higher absolute cell selection priority. If CPICH RSCP is used, then QOffset1sn is applied; and if CPICH Ec/No is used, then QOffset2sn is applied. QOffset1sn, QOffset2sn, or other cell selection priority parameters can be used to adjust the cell border 12 toward, or away from, a neighbouring cell.

Both QOffset1sn and QOffset2sn are neighbouring-cell specific (and UE-independent), and thus different values may be used for different neighbouring cells. Each cell broadcasts the QOffset1sn and QOffset2sn values associated with each of its neighbouring cells, and the values of QOffset1sn and QOffset2sn are coordinated among cells that share the same cell border. A UE 14 performs cell selection/reselection based on the QOffset1sn and QOffset2sn values broadcast by the cell it currently camps on.

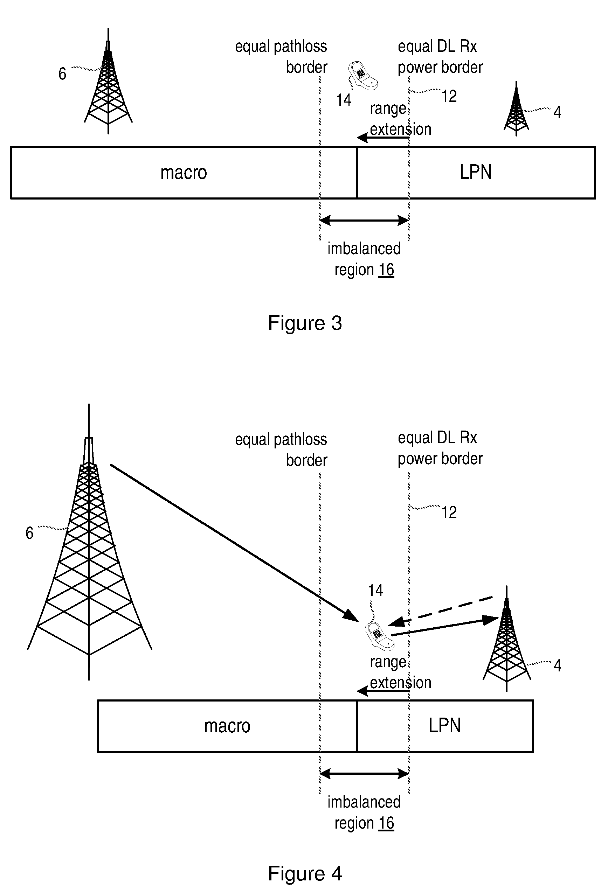

For example, referring to Figure 3, which illustrates a range extension region in a communication network having an imbalanced region between two base stations, if in the cell managed by the LPN 4, the values of QOffset1sn and QOffset2sn associated with the cell managed by macrocell base station 6 are set to be -3 dB, the cell border 12 between the LPN 4 and macrocell base station 6 for UEs being served by the LPN 4 moves further from the LPN 4, which is effectively a range extension for the LPN 4. For UEs being served by the macrocell base station 6, the corresponding values of QOffset1sn and QOffset2sn associated with the LPN 4 will be 3 dB, thus moving the border 12 between the LPN 4 and macrocell base station 6 towards the macrocell base station 6. This coordination allows a consistent cell border 12 to be maintained.

Using the values of QOffset1sn or QOffset2sn to move the border between a macro cell and a LPN cell to achieve LPN cell range extension for UEs in the CELL_FACH state in order to increase the traffic uptake of a low-power node is an attractive enhancement for heterogeneous network deployment. However, when the cell border is moved into the imbalanced region, the DL performance for a UE served by a low-power node may degrade. As explained earlier, the received DL power from the low-power node is weaker than that from the macro BS. Moreover, the interference from the macro BS to both data and control channels transmitted from the LPN can be quite strong.

The technology described below addresses and resolves the issue of degraded downlink performance for CELL_FACH UEs in the LPN range extension area. The technology also addresses the issue of degraded downlink performance for CELL_DCH UEs in the LPN range extension area.

### SUMMARY

After an initial data transmission by a UE to a LPN using a common or shared radio resource (e.g., common enhanced dedicated channel (E-DCH)) allocated by the LPN, where the UE is in a first connection state or mode in the LPN cell in which only common radio resources are available to the UE, e.g., a CELL_FACH session, the UE maintains the common radio resource until an inactivity timer expires. But before the inactivity timer expires, a multiflow is set up so that a downlink data flow from a nearby macro node which is not in the UE's active set of base stations is also established for that same UE being served by the LPN. In some instances of the multiflow connection, a DL data flow from the network to the UE can be split at a network node (e.g., RNC) to take different paths (e.g., via different base stations) to the UE. As long as the UE holds onto the allocated common radio resource in the LPN cell, subsequent downlink data may be received from both the macro BS and LPN. Figure 4 illustrates the multiflow connection in the downlink where the DL data for the UE may be received from both the macro cell and the LPN cell.

However, in various embodiments, the multiflow connection is selectively controllable so that the network may decide to send downlink data using only the macro base station, even though the macro base station is not in the UE's active set, (1) if the DL macro link to the UE is the better downlink (compared to the DL LPN link to the UE) when the UE is in the LPN range extension area and/or (2) to avoid the complication associated with splitting the data flow in the network, e.g., at the RNC, for the multiflow. In this case, from the point of view of the UE, the UL scheduler resides in the LPN 4 and the DL scheduler resides in the macro base station 6 (i.e. the scheduling of UL data is performed by the LPN 4 and the scheduling of the DL data is performed by the macro base station 6). This selective control is shown in Figure 4 using a dashed line from the LPN cell. In one example embodiment, the multiflow feature may be activated only for certain services that are determined to be more likely to have more than one data transmissions or receptions separated by short inactivity periods, i.e., a service-aware feature.

According to a first aspect, there is provided a_method of operating a network node in a communication network, the communication network comprising a mobile device, a first base station and a second base station, the first base station having a lower transmission power than the second base station and being located within the coverage area of the second base station, the mobile device being located within an imbalanced region between the first base station and the second base station and being served by the first base station, the method in the network node comprising configuring the mobile device, the first base station and the second base station such that the mobile device transmits uplink data to the first base station, and the mobile device receives downlink data only from the second base station.

In some embodiments, the step of configuring comprises receiving a measurement report from the mobile device; and processing the measurements in the measurement report to determine if the mobile device is at a location where it would be better to provide the downlink data from the second base station than the first base station.

In other embodiments, the step of configuring comprises receiving an indication from the mobile device that the mobile device is at a location where it would be better to provide the downlink data from the second base station than the first base station.

In some embodiments, the step of configuring comprises sending a signal to the mobile device indicating that the second base station is being configured to transmit downlink data to the mobile device.

In some embodiments, the step of configuring comprises receiving downlink timing information from the mobile device; and transmitting the downlink timing information to the second base station.

In some embodiments, the step of configuring comprises transmitting information about the mobile device to the second base station to enable the second base station to synchronise with transmissions from the mobile device.

In some embodiments, the information about the mobile device comprises a scrambling code and/or identity of the mobile device.

In some embodiments, the step of configuring comprises receiving a signal from the second base station confirming that the second base station is ready to start transmitting downlink data to the mobile device; and transmitting a signal to the first base station indicating that the second base station is ready to start transmitting downlink data to the mobile device.

In some embodiments, the method further comprises the step of receiving uplink data from the mobile device via the first base station.

In some embodiments, the method further comprises the step of:
transmitting downlink data that is to be transmitted to the mobile device only to the second base station.

In some embodiments, the second base station is not included in an active set of the mobile device prior to the step of configuring being performed.

In some embodiments the mobile device is in a CELL_FACH or CELL_DCH mode.

The imbalanced region is a region between a location where a signal strength or quality of a signal transmitted from the first base station to the mobile device is the same as the signal strength or quality of a signal transmitted from the second base station to the mobile device, and the location where a signal strength or quality of a signal transmitted from the mobile device to the first base station is the same as the signal strength or quality of a signal transmitted from the mobile device to the second base station. The signal strength or quality of the signal transmitted from the mobile device to the first base station and the signal strength or quality of the signal transmitted from the mobile device to the second base station is preferably a path loss.

According to a second aspect, there is provided a computer program product having computer readable instructions embodied therein, the computer program instructions being configured such that, on execution by a computer or suitable microprocessor, the computer or suitable microprocessor performs any of the methods described above.

According to a third aspect, there is provided a network node for use in a communication network, the communication network comprising a mobile device, a first base station and a second base station, the first base station having a lower transmission power than the second base station and being located within the coverage area of the second base station, the network node comprising a processing module that controls the operation of the network node; and circuitry for allowing the network node to communicate with the first base station and the second base station; wherein the processing module and circuitry are arranged to configure the mobile device, the first base station and the second base station such that the mobile device transmits uplink data to the first base station and the mobile device receives downlink data only from the second base station when the mobile device is located within an imbalanced region between the first base station and the second base station and the mobile device is being served by the first base station.

Various embodiments of the network node are contemplated in which the processing module is arranged to configure the mobile device, the first base station and the second base station according to the various method embodiments described above.

In some embodiments, the network node is a radio network controller or an eNodeB.

According to a fourth aspect, there is provided a method of operating a mobile device in a communication network, the communication network comprising a first base station, a second base station and a network node, the first base station having a lower transmission power than the second base station and being located within the coverage area of the second base station, the mobile device being located within an imbalanced region between the first base station and the second base station and being served by the first base station, the method in the mobile device comprising configuring the mobile device such that the mobile device transmits uplink data to the first base station, and the mobile device receives downlink data only from the second base station.

In some embodiments, the step of configuring comprises transmitting a measurement report to the network node.

In alternative embodiments, the step of configuring comprises transmitting an indication to the network node that the mobile device is at a location where it would be better to provide the downlink data from the second base station than the first base station.

In some embodiments, the step of configuring comprises receiving a signal from the network node indicating that the second base station is being configured to transmit downlink data to the mobile device.

In some embodiments, the step of configuring comprises transmitting downlink timing information to the network node.

In some embodiments, the step of configuring comprises increasing the power of an uplink control channel transmitted by the mobile device. The uplink control channel may be a dedicated physical control channel, DPCCH.

In some embodiments, the step of configuring comprises receiving a signal instructing the mobile device to monitor a downlink control channel transmitted by the second base station; and monitoring the downlink control channel transmitted by the second base station. The downlink control channel may be a high-speed shared control channel, HS-SCCH.

In some embodiments, the step of monitoring the downlink control channel comprises monitoring for transmission power control commands from the second base station.

In some embodiments, the step of monitoring the downlink control channel comprises monitoring for downlink control channel to determine if the mobile device is scheduled to receive downlink data from the second base station.

In some embodiments, the method further comprises the step of transmitting an indication of the quality of signals transmitted by the second base station and/or acknowledgements in respect of downlink data received from the second base station to the second base station.

In some embodiments, the method further comprises the step of transmitting uplink data to the first base station.

In some embodiments, the method further comprises the step of receiving downlink data only from the second base station.

In some embodiments, the second base station is not included in an active set of the mobile device when the method is performed.

In some embodiments, the mobile device is in a CELL_FACH or CELL_DCH mode when the method is performed.

According to a fifth aspect, there is provided a computer program product having computer readable instructions embodied therein, the computer program instructions being configured such that, on execution by a computer or suitable microprocessor, the computer or suitable microprocessor performs any of the methods described above.

According to a sixth aspect, there is provided a mobile device for use in a communication network, the communication network comprising a first base station, a second base station and a network node, the first base station having a lower transmission power than the second base station and being located within the coverage area of the second base station, the mobile device comprising a processing module that controls the operation of the mobile device; and a transceiver module for allowing the mobile device to communicate with the first base station, the second base station and the network node via the first base station and/or second base station; wherein the processing module and transceiver module are arranged to configure the mobile device to transmit uplink data to the first base station and receive downlink data only from the second base station when the mobile device is located within an imbalanced region between the first base station and the second base station and the mobile device is being served by the first base station.

Various embodiments of the mobile device are contemplated in which the processing module is arranged to configure the mobile device according to the various method embodiments described above.

According to a seventh aspect, there is provided a method of operating a second base station in a communication network, the communication network comprising a mobile device, a first base station and a network node, the first base station having a lower transmission power than the second base station and being located within the coverage area of the second base station, the mobile device being located within an imbalanced region between the first base station and the second base station and being served by the first base station, the method in the second base station comprising configuring the second base station such that the second base station transmits downlink data to the mobile device.

In some embodiments, the second base station is configured to transmit downlink data to the mobile device while the mobile device is configured to transmit uplink data to the first base station.

In some embodiments, the step of configuring comprises receiving a signal from the network node instructing the second base station to be configured to transmit downlink data to the mobile device.

In some embodiments, the step of configuring comprises acquiring synchronisation with uplink transmissions from the mobile device.

In some embodiments, the step of configuring further comprises receiving information for the mobile device from the network node; and using the received information to acquire synchronisation with the uplink transmissions from the mobile device. The received information can comprise a scrambling code and identity for the mobile device.

In some embodiments, the step of configuring further comprises receiving downlink timing information for the second base station as measured by the mobile device from the network node.

In some embodiments, the step of acquiring synchronisation comprises determining a nominal uplink frame boundary for a control channel from the mobile device using the received downlink timing information.

In some embodiments, the step of acquiring synchronisation further comprises searching for an actual uplink frame boundary in a window around the determined nominal frame boundary, the size of the window being determined based on information on the range of propagation delays for mobile devices in the imbalanced region.

In some embodiments, the step of configuring comprises transmitting a signal to the network node confirming that the second base station is ready to start transmitting downlink data to the mobile device.

In some embodiments, the method further comprises the step of transmitting a downlink control channel to the mobile device. The downlink control channel may include transmission power control commands for the mobile device. The downlink control channel may also or alternatively include downlink data scheduling information for the mobile device.

In some embodiments, the method further comprises receiving an indication of the quality of signals transmitted by the second base station and/or acknowledgements in respect of downlink data received from the second base station from the mobile device.

In some embodiments, the method further comprises the step of transmitting downlink data received from the network node to the mobile device.

In some embodiments, the second base station is not included in an active set of the mobile device prior to the step of configuring.

According to an eight aspect, there is provided a computer program product having computer readable instructions embodied therein, the computer program instructions being configured such that, on execution by a computer or suitable microprocessor, the computer or suitable microprocessor performs any of the methods described above.

According to a ninth aspect, there is provided a second base station for use in a communication network, the communication network comprising a mobile device, a first base station and a network node, the second base station comprising a processing module that controls the operation of the second base station; circuitry for allowing the second base station to communicate with the network node; and a transceiver module for allowing the second base station to communicate with the mobile device; wherein the processing module, circuitry and transceiver module are arranged to configure the second base station such that the second base station transmits downlink data to the mobile device in the event that the first base station has a lower transmission power than the second base station, the first base station is located within the coverage area of the second base station and the mobile device is located within an imbalanced region between the first base station and the second base station, with the mobile device being served by the first base station.

Various embodiments of the second base station are contemplated in which the processing module is arranged to configure the second base station according to the various method embodiments described above.

Other aspects are contemplated in which the first base station is also able to transmit downlink data to the mobile device.

In particular, according to a first further aspect, there is provided a method of operating a network node in a communication network, the communication network comprising a mobile device, a first base station and a second base station, the first base station having a lower transmission power than the second base station and being located within the coverage area of the second base station, the mobile device being located within an imbalanced region between the first base station and the second base station and being served by the first base station, the method in the network node comprising configuring the mobile device, the first base station and the second base station such that the mobile device transmits uplink data to the first base station, and the mobile device receives downlink data from the second base station. In this aspect, an active set of the mobile device may not include the second base station.

Various embodiments of this method similar to the embodiments of the first aspect above are also contemplated. Likewise, a network node configured to perform these methods is also contemplated.

According to a second further aspect, there is provided a method of operating a mobile device in a communication network, the communication network comprising a first base station, a second base station and a network node, the first base station having a lower transmission power than the second base station and being located within the coverage area of the second base station, the mobile device being located within an imbalanced region between the first base station and the second base station and being served by the first base station, the method in the mobile device comprising configuring the mobile device such that the mobile device transmits uplink data to the first base station, and the mobile device receives downlink data from the second base station. In this aspect, an active set of the mobile device may not include the second base station.

Various embodiments of this method similar to the embodiments of the fourth aspect above are also contemplated. Likewise, a mobile device configured to perform these methods is also contemplated.

According to a third further aspect, there is provided a method of operating a second base station in a communication network, the communication network comprising a mobile device, a first base station and a network node, the first base station having a lower transmission power than the second base station and being located within the coverage area of the second base station, the mobile device being located within an imbalanced region between the first base station and the second base station and being served by the first base station, the method in the second base station comprising configuring the second base station such that the second base station transmits downlink data to the mobile device. In this aspect, the active set of the mobile device may not include the second base station.

Various embodiments of this method similar to the embodiments of the first aspect above are also contemplated. Likewise, a second base station configured to perform these methods is also contemplated.

### BRIEF DESCRIPTION OF THE DRAWINGS

Figure 1 is a block diagram of an UTRAN/HSPA type of communication network;
Figure 2 is an illustration of a communication network having an imbalanced region between two base stations;
Figure 3 is an illustration of range extension in an imbalanced region;
Figure 4 is an illustration of a multiflow connection in a downlink where the downlink data for a UE may be received from both a macro cell and a low power cell;
Figure 5 is a block diagram of a mobile device according to an embodiment of the invention;
Figure 6 is a block diagram of a base station according to an embodiment of the invention;
Figure 7 is a block diagram of a network node according to an embodiment of the invention;
Figure 8 is a flow chart illustrating a method of operating a network node according to an aspect of the invention;
Figure 9 is a flow chart illustrating a method of operating a mobile device according to an aspect of the invention;
Figure 10 a flow chart illustrating a method of operating a base station according to an aspect of the invention;
Figure 11 is a diagram illustrating the signalling between nodes in a communication network according to an embodiment of the invention; and
Figure 12 is a diagram illustrating the signalling between nodes in a communication network according to another embodiment of the invention.

### DESCRIPTION OF NON-LIMITING EXAMPLE EMBODIMENTS

The following sets forth specific details, such as particular embodiments for purposes of explanation and not limitation. But it will be appreciated by one skilled in the art that other embodiments may be employed apart from these specific details. In some instances, detailed descriptions of well known methods, nodes, interfaces, circuits, and devices are omitted so as not obscure the description with unnecessary detail. Those skilled in the art will appreciate that the functions described may be implemented in one or more nodes using hardware circuitry (e.g., analog and/or discrete logic gates interconnected to perform a specialized function, ASICs, PLAs, etc.) and/or using software programs and data in conjunction with one or more digital microprocessors or general purpose computers. Nodes that communicate using the air interface also have suitable radio communications circuitry. Moreover, the technology can additionally be considered to be embodied entirely within any form of computer-readable memory, such as solid-state memory, magnetic disk, or optical disk containing an appropriate set of computer instructions that would cause a processor to carry out the techniques described herein.

Hardware implementation may include or encompass, without limitation, digital signal processor (DSP) hardware, a reduced instruction set processor, hardware (e.g., digital or analog) circuitry including but not limited to application specific integrated circuit(s) (ASIC) and/or field programmable gate array(s) (FPGA(s)), and (where appropriate) state machines capable of performing such functions.

In terms of computer implementation, a computer is generally understood to comprise one or more processors or one or more controllers, and the terms computer, processor, and controller may be employed interchangeably. When provided by a computer, processor, or controller, the functions may be provided by a single dedicated computer or processor or controller, by a single shared computer or processor or controller, or by a plurality of individual computers or processors or controllers, some of which may be shared or distributed. Moreover, the term "processor" or "controller" also refers to other hardware capable of performing such functions and/or executing software, such as the example hardware recited above.

Although the description is given for user equipment (UE), it should be understood by the skilled in the art that "UE" is a non-limiting term comprising any mobile or wireless device or node equipped with a radio interface allowing for at least one of: transmitting signals in UL and receiving and/or measuring signals in DL. A UE herein may comprise a UE (in its general sense) capable of operating or at least performing measurements in one or more frequencies, carrier frequencies, component carriers or frequency bands. It may be a "UE" operating in single- or multi-RAT or multi-standard mode.

A cell is associated with a base station, where a base station comprises in a general sense any node transmitting radio signals in the downlink (DL) and/or receiving radio signals in the uplink (UL). Some example base stations are eNodeB, eNB, Node B, macro/micro/pico radio base station, home eNodeB (also known as femto base station), relay, repeater, sensor, transmitting-only radio nodes or receiving-only radio nodes. A base station may operate or at least perform measurements in one or more frequencies, carrier frequencies or frequency bands and may be capable of carrier aggregation. It may also be a single-radio access technology (RAT), multi-RAT, or multi-standard node, e.g., using the same or different base band modules for different RATs. Although the embodiments described below refer to a picocell base station as an example of a LPN within the coverage area of a macrocell base station, it will be appreciated that the teachings of this application are applicable to any type of heterogeneous deployment of nodes (e.g. a picocell base station within the coverage area of a microcell base station, a microcell base station within the coverage area of a macrocell base station, or a femtocell base station within the coverage area of any of a picocell, microcell or macrocell base station).

The signalling described is either via direct links or logical links (e.g. via higher layer protocols and/or via one or more network nodes). For example, signalling from a coordinating node may pass another network node, e.g., a radio node.

The example embodiments are described in the non-limiting example context of a UTRAN type system. However, the technology is not limited to UTRAN, but may apply to any Radio Access Network (RAN), single-RAT or multi-RAT. Some other RAT examples are Long Term Evolution (LTE)-Advanced, UMTS, GSM, cdma2000, WiMAX, and WiFi. For example, the embodiments can be implemented in an LTE network, in which case the functions of the RNC 8 described below can be performed by another node, for example a serving gateway (S-GW) in the core network 10. If applying the technology to LTE, for example, those skilled in the art will understand that the medium access control (MAC) entities in LTE have different names and functionalities.

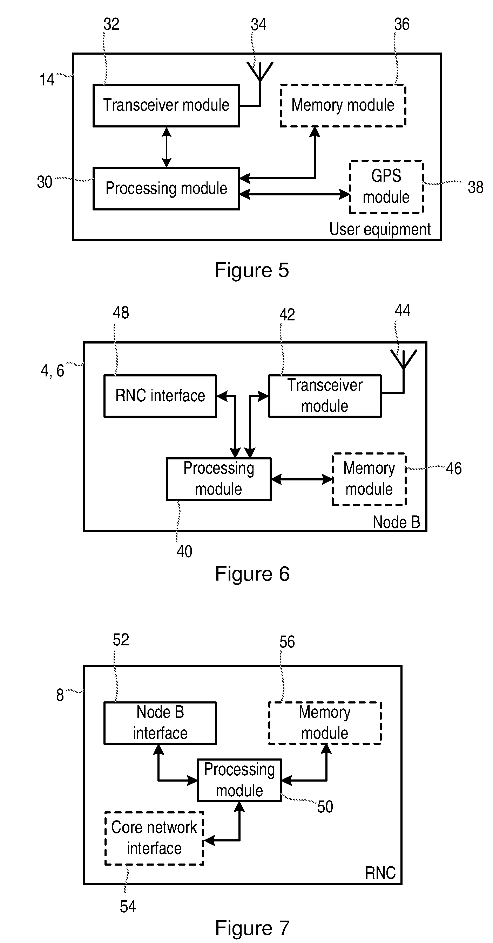

Figure 5 shows a user equipment (UE) 14 that can be used in one or more of the non-limiting example embodiments described. The UE 14 comprises a processing module 30 that controls the operation of the UE 14. The processing module 30 is connected to a transceiver module 32 with associated antenna(s) 34 which are used to receive and transmit signals to/from a base station 4, 6 in the network 2. The user equipment 14 also comprises a memory module 36 that is connected to the processing module 30 and that stores program and other information and data required for the operation of the UE 14. In some embodiments, the UE 14 may optionally comprise a satellite positioning system (e.g. GPS) receiver module 38 that can be used to determine the position and speed of movement of the UE 14.

Figure 6 shows a base station 4, 6 (called a Node B in UMTS) that can be used in example embodiments described above. Although in practice the LPN/picocell base station 4 will not be identical in size and structure to the macrocell base station 6, for the purposes of illustration, the base stations 4, 6 are assumed to include similar components. Thus, the base station 4, 6 comprises a processing module 40 that controls the operation of the base station 4, 6. The processing module 40 is connected to a transceiver module 42 with associated antenna(s) 44 which are used to transmit signals to, and receive signals from, user equipments 14 in the network 2. The base station 4, 6 also comprises a memory module 46 that is connected to the processing module 40 and that stores program and other information and data required for the operation of the base station 4, 6. The base station 4, 6 also includes components and/or circuitry 48 for allowing the base station 4, 6 to exchange information with the RNC 8 (which is typically via the lub interface) and/or other network node.

Figure 7 shows a radio network controller (RNC) 8 that can be used in the example embodiments described. The RNC 8 comprises a processing module 50 that controls the operation of the RNC 8. The processing module 50 is connected to components and/or circuitry 52 for allowing the RNC 8 to exchange information with the base stations 4, 6 with which it is associated (which is typically via the lub interface), and components or circuitry 54 for allowing the RNC 8 to exchange information with the core network 10 (which is typically via the lu-CS and/or lu-PS interface). The RNC 8 also comprises a memory module 56 that is connected to the processing module 50 and that stores program and other information and data required for the operation of the RNC 8.

It will be appreciated that not all components of the UE 14, base station B 4, 6, and RNC 8 are illustrated.

Multiflow is a standardized feature in Third Generation Partnership Project (3GPP) release-11 for HSPA. But in release-11, only cells in the active set can be used for multiflow. The active set is the set of base stations that are receiving the UE's uplink transmissions. These base stations also provide feedback to the UE, e.g., hybrid automatic repeat request (HARQ) ACK/NACK and power control commands. But in accordance with the technology described in this application, a cell not in the active set may also be set up for multiflow to transmit the downlink data. One example of this situation is CELL_FACH mode where the active set consists of only one link, i.e., between the UE and the serving cell. While CELL_FACH is used as a non-limiting example in the description below, the technology described may also be applied to other UE modes. For example, the technology described may also be applied to a CELL_DCH mode for one or more links outside the active set.

Also in accordance with the technology described in this application, a macro cell or other higher power base station (i.e. higher power than the LPN that is serving the UE) that is in the active set of the UE can be set up for multiflow such that only the macro cell/higher power base station transmits DL data to the UE.

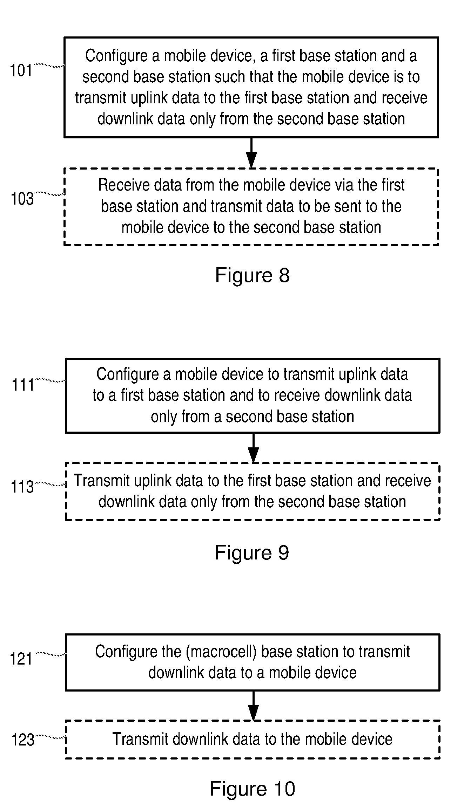

A method of operating a network node, e.g. an RNC 8, in accordance with various embodiments is shown in Figure 8. The network node 8 is part of a communication network 2 that comprises a mobile device 14, and two or more base stations 4, 6, with the first base station 4 having a lower transmission power than the second base station 6 and the first base station 4 being located within the coverage area of the second base station. This arrangement of the first and second base stations 4, 6 results in there being an imbalanced region between the base stations 4, 6 as described above. The first base station 4 can be, e.g., a picocell base station, and the second base station 6 can be, e.g., a macrocell base station.

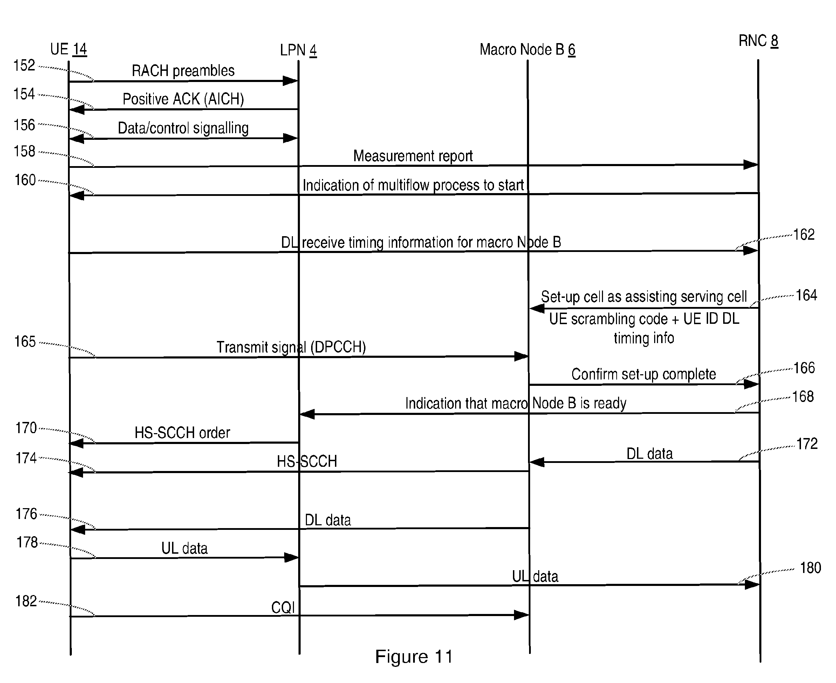

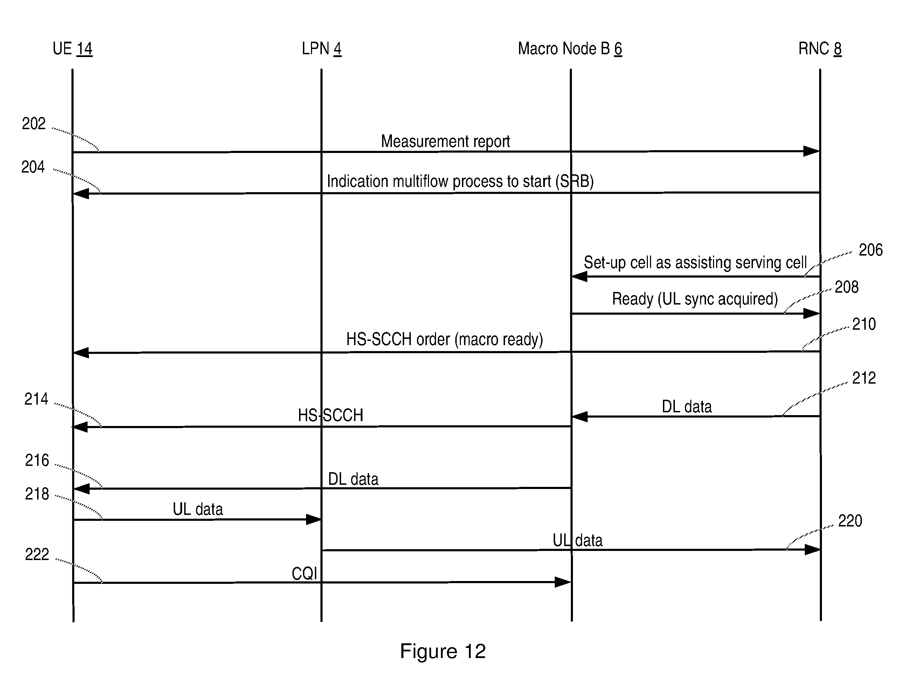

In a first step of the method, step 101, when the mobile device 14 is located within the imbalanced region between the first base station 4 and the second base station 6, and the mobile device 14 is being served by the first base station 4, the network node operates to configure the mobile device 14, the first base station 4 and the second base station 6 in such a way that the mobile device 14 continues to transmit uplink data (i.e. data transmitted in an uplink) to the first base station 4 and the mobile device 14 receives downlink data (i.e. data transmitted in a downlink) only from the second base station 6. Exemplary embodiments of step 101 are described in more detail below with reference to Figures 11 and 12.

Once the mobile device 14, the first base station 4 and the second base station 6 have been suitably configured in step 101, the method in the network node 8 comprises receiving uplink data from the mobile device 14 via the first base station 4 and sending downlink data intended for the mobile device 14 to the second base station 6 for transmission to the mobile device 14 by the second base station 6 (step 103).

Figure 9 illustrates a corresponding method of operating a mobile device 14, e.g. a UE, in accordance with various embodiments. The mobile device 14 is configured for use in a communication network 2 that comprises two or more base stations 4, 6 that are controlled by a network node 8. In the network 2 the first base station 4 has a lower transmission power than the second base station 6 and the first base station 4 is located within the coverage area of the second base station. As above, the first base station 4 can be, e.g., a picocell base station, and the second base station 6 can be, e.g., a macrocell base station.

In a first step of the method, step 111, when the mobile device 14 is located within the imbalanced region between the first base station 4 and the second base station 6 and the mobile device 14 is being served by the first base station 4, the mobile device 14 is configured so that it can transmit uplink data to the first base station 4 and is able to receive downlink data only from the second base station 6. Exemplary embodiments of step 111 are described in more detail below with reference to Figures 11 and 12.

Once the mobile device 14 has been configured for uplink and downlink transmissions in step 111, the mobile device 14 transmits uplink data to the first base station 4 and receives downlink data only from the second base station 6 (step 113).

Figure 10 illustrates a corresponding method of operating a base station in accordance with various embodiments. The base station operated according to this method is a higher-power base station, such as a macrocell base station, and thus corresponds to the second base station 6. The base station 6 is configured for use in a communication network that comprises a mobile device, another (the first) base station 4 and a network node 8.

The base station 6 is configured to have a higher transmission power than the first base station 4, and when the first base station 6 is located within the coverage area of the second base station 6, there will be an imbalanced region between the base stations 4,6.

In a first step of the method, step 121, when the mobile device 14 is located within the imbalanced region between the first base station 4 and the second base station 6 and the mobile device 14 is being served by the first base station 4, the second base station 6 is configured to enable the second base station to transmit downlink data to the mobile device.

Once the second base station 6 has been suitably configured, the method comprises transmitting downlink data to the mobile device 14 from the second base station 6 (step 123). The second base station 6 may not receive any uplink data transmissions from the mobile device 14, these may continue to be transmitted to the first base station 4 by the mobile device 14. In addition, the first base station 4 is preferably not transmitting any downlink data to the mobile device 14, so the second base station 6 is the only base station transmitting downlink data to the mobile device 14.

An example process for setting up DL multiflow for a CELL_FACH UE in an LPN range extension area (such as the example shown in Figure 3 above) including a nonactive cell (i.e. a cell that is not in the active set of the UE) includes some or all of the following steps. The steps take place in different nodes of the communication network 2 (so in the first base station 4, the second base station 6 and the RNC 8) as well as in the UE 14, as noted below. Figure 11 is a signalling diagram illustrating the signalling between the nodes 4, 6, 8 and the UE 14 in this exemplary process.

The UE 14 applies some QOffset1sn/QOffset2sn value to its CPICH RSCP or CPICH Ec/No measurements to create a range extension area in the imbalanced region 16. As the technology described herein helps to mitigate the problems with UEs operating in the range extension region of the imbalanced region 16 by providing the downlink data from the macrocell base station 6, larger QOffset1sn/QOffset2sn values can be used than in networks operating according to conventional technologies.

Because the UE 14 is in the LPN range extension area, the LPN cell 4 is the serving cell. Furthermore, since soft handoff is not supported in CELL_FACH, the LPN cell 4 is the only cell in the active set. First, the UE 14 sends a random access UL signal (e.g., random access channel (RACH) preambles) to the LPN 4 (signal 152 in Figure 11) until it receives a positive acknowledgement (signal 154) from the LPN 4 (e.g., on the acquisition indicator channel (AICH)), This procedure starts up a CELL_FACH session in WCDMA. A common channel, e.g., common enhanced-dedicated channel (E-DCH), high speed-shared control channel (HS-SCCH), high speed downlink shared channel (HS-DSCH), is used to send/receive data or control signalling to/from the LPN 4 (signal 156). The common channels, e.g., the common E-DCH, HS-SCCH, and HS-DSCH, are allocated by the LPN cell 4. Second, the UE 14 sends a measurement report (signal 158) to the network (e.g. RNC 8) so that the RNC 8 (or other network node) may determine whether the UE 14 may benefit from receiving downlink data from a nearby macro node. Third, if the RNC 8 determines that the UE 14 may benefit from receiving downlink data from a nearby macro node (for example if the DL macro link to the UE 14 is the better downlink compared to the DL LPN link to the UE 14 when the UE 14 is in the LPN range extension area) the RNC 8 (or other network node) indicates to UE 14 that a multiflow (MF) setup process will be starting so that the UE 14 is aware that another new cell (e.g., the macro cell 6) will be sending downlink data shortly. This indication from the RNC 8 or other network node is shown as signal 160 in Figure 11.

Conventionally, during a CELL_FACH session, an inactivity timer is used for determining when the UE 14 needs to release the allocated common resources (e.g. common E-DCH). After the UE 14 empties its transmit buffer, the inactivity timer starts, and once it reaches a predetermined timer expiration value, the UE 14 releases its allocated common resources. Thereafter, another data transmission from the UE 14 must start from the random access procedure described above. Therefore, for a multiflow to be successfully established for the CELL_FACH UE 14, the new data flow from the new macro cell 6 must be set up before the inactivity timer expires. The timer expiration value is therefore preferably set to account for the set up time of the new data flow.

The new macro cell 6 needs to acquire uplink synchronization to the UE 14 in order to receive control signalling. To facilitate uplink synchronization by the new cell 6, the UE 14 may need to boost the power of its UL transmission, e.g., over the downlink physical control channel (DPCCH) so that it can be received at the macro cell base station 6 (the DPCCH is used in both downlink and uplink to carry pilot symbols and other signals, the pilot symbols can be used for acquiring synchronisation and obtaining signal to interference plus noise ratio (SINR) measurements). Furthermore, receipt of the multiflow indication (signal 160) prompts the UE 14 to send DL receive timing information with regard to the new macro cell 6 to the RNC 8 via the LPN 4 (signal 162).

As noted above, the UE increases UL transmit power (e.g., over the DPCCH) based on, e.g., pathloss, to ensure the new macro cell 6 can acquire UL synchronisation. Next, the RNC 8 sets up the new macro cell 6 as an assisting serving cell (signal 164). This means that there will be two serving cells, the primary serving cell (the LPN 4) and the assisting serving cell (the macro cell 6), with each cell having an associated scheduler for scheduling DL data. In WCDMA, this means the UE scrambling code and identity need to be communicated to the new cell 6. Furthermore, the new cell's DL timing information as measured by the UE 14 and sent to the RNC 8 (in signal 162) is forwarded to the new cell 6 to allow the new cell 6 to set a frame boundary, e.g., for the fractional dedicated control channel (F-DPCH). The new macro cell 6 determines frame boundary timing, e.g., for the F-DPCH, based on the timing information forwarded by the RNC 8 in signal 164. The new macro cell 6 then acquires UL synchronisation to the UE's DPCCH transmit signal (signal 165) that is being transmitted by the UE 14 at increased power. In WCDMA, there is a 1024-chip offset between the downlink and uplink frame boundary. Thus, after setting the F-DPCH timing, the new macro cell 6 knows where the nominal uplink frame boundary is. But due to unknown propagation delay and a limitation on F-DPCH frame boundary (which needs to an integer multiple of 256 chips from the CPICH frame boundary), the actual UL frame boundary at the antenna 44 and transceiver module 42 of the new macro cell base station 6 will be different from the nominal boundary. The new macro cell 6 may use the knowledge of the range of the propagation delays for UEs 14 in the LPN 4 range extension area to limit the search window around the nominal frame boundary. This reduces the complexity of UL synchronisation.

Once UL synchronisation has been achieved by the macro cell 6, the macro new cell 6 confirms its readiness for acting as an assisting serving cell by sending a confirmation signal (signal 166) to the RNC 8. In the mean time, the UE 14 has been monitoring the LPN cell's control channel signalling, e.g., HS-SCCH (which carries scheduling information as well as certain signalling information), after receiving a confirmed UE access, e.g., on the AICH, in the LPN cell 4.

After receiving confirmation signal 166, the RNC 8 sends a signal 168 to the LPN 4 indicating that the macro cell base station 6 is ready. The LPN 4 receives the confirmation signal from the RNC 8 that the new macro cell is ready and sends an order to the UE 14 (signal 170), e.g., over the HS-SCCH, to instruct the UE 14 to start monitoring control channel signalling, e.g., HS-SCCH, from the new macro cell 6. This means that the macro cell 6 has now taken over scheduling of the DL data to the UE 14. However, scheduling of UL data remains in the LPN 4.

Once the UE 14 starts to monitor the control channel signalling, e.g., on the HS-SCCHs, in both the LPN 4 and new macro cells 6, the setup of a downlink multiflow is complete and DL data is sent only by the new macro cell 6 to the UE 14. In particular, DL data 172 is sent from the RNC 8 to the macrocell base station 6 and the macrocell base station 6 schedules the DL data for transmission to the UE 14 and indicates the scheduling in the HS-SCCH signalling from the macro 6 to the UE 14 (signal 174). The DL data can then be transmitted to the UE 14 by the macrocell base station 6 (signal 176).

The UE 14 sends UL data to the LPN 4 (signal 178), which then forwards the UL data to the RNC 8 (signal 180) for transmission through the core network 10.

In some cases, an existing multiflow dedicated physical control channel for HS-DSCH (HS-DPCCH) configuration can be used to provide the channel quality indicator (CQI) reports and HARQ acknowledgment signalling in respect of the received DL data to both cells. The HS-DPCCH is an uplink signalling channel in WCDMA that contains HARQ ACK/NACK and CQI. CQI is used to help the base station make scheduling decisions. However, as mentioned earlier the motivation of setting up the new cell is mainly to take advantage of the better downlink in the macro cell 6. Thus, when the UE 14 only receives downlink data from the macro cell 6, the CQI reports and HARQ acknowledgment signalling may be configured to address to the macro cell only (signal 182).

In alternative implementations where DL data is sent to the UE 14 by both the LPN 4 and macrocell 6, once the setup of a downlink multiflow is complete, a DL data stream may be divided between the LPN 4 and the macro cell 6 by the RNC 8, so that both the LPN 4 and macro cell 6 send DL data to the UE 14. In that case, the UE 14 provides CQI reports and HARQ acknowledgment signalling in respect of the received DL data to both cells.

The following steps illustrate example procedures for the UE 14. These procedures enable the configuration of the UE 14 so that it can transmit uplink data to the first base station 4 and is able to receive downlink data only from the second base station 6 according to step 111 in Figure 9.
(1) Send a measurement report or other indication to the network (signal 158) that UE 14 is at a location where the downlink is better served by a macro BS 6 than a LPN 4.
(2) Receive confirmation from the network that a data flow via the macro BS 6 will be setup for UE 14 (signal 160).
(3) Increase UL signalling channel, e.g., DPCCH, power level so that it can reach the macro BS 6.
(4) Synchronize to the macro BS's DL signal for the UE 14 and report macro BS's DL timing information to the network (signal 162).
(5) Receive (via a DL signalling channel like the HS-SCCH) an indication that the setup of a data flow from the macro BS 6 for the UE 14 is complete (signal 170).
(6) Send CQI feedback with respect to the link between the UE 14 and the macro BS 6 to the macro BS 6 (signal 182), and, in the case where both the LPN 4 and macro BS 6 are sending DL data to the UE 14, also sending CQI feedback with respect to the link between the UE 14 and the LPN 4 to the LPN 4.
(7) Monitor power control commands issued by the macro BS 6 in addition to monitoring power control commands issued by the LPN 4.
(8) Monitor the macro BS DL signalling channel e.g., HS-SCCH (signal 174) to determine if the UE 14 is scheduled in the macro cell 6 to receive data from the macro cell 6. In the case where both the LPN 4 and macro BS 6 are sending DL data to the UE 14, the UE 14 also monitors the LPN DL signalling channel (e.g., HS-SCCH) to determine if the UE 14 is scheduled in the LPN cell 4 to receive data from the LPN cell 4.
(9) If the UE 14 is scheduled in the macro cell 6, the UE 14 processes the associated DL channel for the macro cell 6, e.g., the one or more high speed physical downlink shared channels (HS-PDSCHs), to obtain the DL data from the macro cell 6 (signal 176).

The following steps illustrate example procedures for the LPN 4.
(1) Receive and forward UE's measurement report (signal 158) or indication to RNC 8.
(2) Receive and forward RNC's confirmation signal (signals 168 and 170), see UE steps (2) & (5) above.

The following steps illustrate example procedures for the macro base station 6. These procedures enable the configuration of the macro base station 6 so that it can transmit downlink data to the UE 14 according to step 121 in Figure 10.
(1) Receive instruction from RNC 8 to set up a downlink data flow to the UE 14 (signal 164).
(2) Acquire synchronization to the UE's uplink signal (e.g. DPCCH).
(3) Adjust control channel (e.g., F-DPCH) timing for sending power control commands to the UE 14 according to RNC's instruction (signal 164).
(4) Send confirmation to RNC 8 when macro BS 6 is ready to transmit DL data to the UE 14 (signal 166).
(5) Receive UE's DL data from RNC 8 (signal 172).
(6) Schedule UE 14 and inform the UE 14 about the scheduling decision and transport format, e.g., using HS-SCCH (signal 174).
(7) Send data to the UE 14 using DL channel(s), e.g., HS-PDSCH (signal 176).

The following steps illustrate example procedures for the RNC 8 (or other network node). These procedures enable the configuration of the UE 14, the LPN 4 and the macro BS 6 in such a way that the UE 14 continues to transmit UL data to the LPN 4 and the UE 14 receives DL data only from the macro BS 6 according to step 101 in Figure 8.
(1) Receive UE's measurement report or indication from the LPN 4 (signal 158).
(2) Query the macro BS 6 whether it has resources to serve DL data to the UE 14.
(3) Receive confirmation from the macro BS 6.
(4) Inform the UE 14 that a data flow via the macro BS 6 will be setup (signal 160).
(5) Receive macro cell's DL timing information from the UE 14 (signal 162).
(6) Calculate macro cell's DL timing adjustment for control channel (e.g., F-DPCH).
(7) Send control channel (e.g., F-DPCH) timing adjustment to the macro BS (signal 164).
(8) Receive confirmation from the macro BS 6 about readiness (signal 166).
(9) Send signalling to the LPN 4 about macro BS's readiness (signal 168).
(10) Send UE's DL data to the macro BS 6 (signal 172).

Figure 12 illustrates exemplary signalling between the UE 14, LPN 4, macro BS 6 and RNC 8 that can be used to establish a multiflow for downlink data to the UE 14 when the UE 14 is in the CELL_DCH state, the UE 14 is in the LPN range extension area and the macro BS is not in the active set of the UE 14. Similar to the CELL_FACH embodiment above, the UE 14 uses some CIO value to create a range extension area in the imbalanced region 16. As the technology described herein helps to mitigate the problems with UEs operating in the range extension region of the imbalanced region 16 by providing the downlink data from the macrocell BS 6, larger CIO values can be used than in networks operating according to conventional technologies.
(1) Thus, a large CIO is applied to set up LPN 4 as the serving cell for UE 14. (2) Through measurement reports (Signal 202), the network, e.g. RNC 8, learns that the best DL for UE 14 is from macro BS 6. (3) The RNC 8 sends a signalling message (e.g. using a radio resource control (RRC) signalling radio-access bearer (SRB)) to UE 14 indicating that macro 6 DL will be set up to provide DL data (signal 204); the signalling message also comprises of one or more of macro cell ID, macro cell scrambling code, macro cell HS-SCCH (the DL control channel carrying scheduling information) configuration. (4) The RNC 8 also informs macro BS 6 about its new role as an assisting serving cell for UE 14 (signal 206). (5) The UE 14 increases the DPCCH power so that macro BS 6 can synchronize with and receive the UE uplink signal. (6) The macro BS 6 sends confirmation to RNC 8 indicating that it is ready to serve as an assisting serving cell for UE 14 (signal 208), with readiness indicating the macro BS 6 has acquired UL synchronisation to the UE 14. (7) The RNC 8 switches the DL user data flow, originally being sent to LPN 4 (the primary serving cell), now to only macro BS 6 (the new assisting serving cell) - signal 212. (8) The RNC 8 sends an HS-SCCH order to UE 14 (signal 210) indicating an assisting serving cell is now set up and ready to send UE's DL data, and that the UE DL data will be sent only via the assisting serving cell macro BS 6. (9) The UE 14 starts to send periodic CQI reports to the new assisting serving cell macro BS 6 (signal 222) and stops sending the periodic CQI reports it has been sending to the primary serving cell LPN 4. (10) The UE 14 also starts to monitor the HS-SCCH from the new assisting serving cell macro 6 (signal 214) for scheduling information and stops monitoring the HS-SCCH from the primary serving cell LPN 4. (11) The UE 14 receives DL data from the macro BS 6 (signal 216) and continues to transmit UL data to the LPN 4 (signal 218), which forwards the UL data to the RNC 8 (signal 220).

The above technology includes multiple advantages. For example, it enables UL/DL separation for CELL_FACH or CELL_DCH UEs in the LPN range extension area so that the uplink data is received by an LPN, taking advantage of smaller path loss to the LPN, while the downlink data is served by a macro base station, taking advantage of a higher received power level from the macro cell. This type of scheduling solution may be referred to as UL/DL decoupling or separation in the sense that the schedulers for UL and DL may reside in different network nodes. For example, the DL scheduler may reside in macro BS 6 while the UL scheduler resides in LPN 4. The setup of a CELL_FACH multiflow takes time and will be beneficial when a UE's data session lasts for certain duration, e.g., a few seconds. For example, the very first reception in a data session may not benefit from CELL_FACH multiflow, but the subsequent receptions will. Accordingly, the multiflow feature may be selectively activated, for example, when the service that the UE is using is determined to be likely to contain multiple short data receptions separated by short inactivity periods.

As noted above, a further advantage is that, as the technology helps to mitigate the problems with UEs operating in the range extension region of the imbalanced region 16 (i.e. the DL performance for a UE 14 served by a low-power node 4 while in the range extension region may degrade), it is now possible for the range extension region to be extended further than with the conventional technologies, thus increasing the effective coverage of the LPN 4 and traffic uptake, thereby reducing the traffic burden on the macrocell base station 6. Thus, it is now possible to make use of much larger CIO values (when the UE 14 is in CELL_DCH) or larger QOffset1sn/QOffset2sn values (when the UE 14 is in CELL_FACH) than in conventional technologies.

Although the description above contains many specifics, they should not be construed as limiting but as merely providing illustrations of some presently preferred embodiments. Embodiments described herein may be considered as independent embodiments or may be considered in any combination with each other to describe non-limiting examples. Although non-limiting, example embodiments of the technology were described in a UTRAN context, the principles of the technology described may also be applied to other radio access technologies. For example, in an LTE system, the NodeB and RNC in UTRAN correspond to a single node, the eNodeB, in LTE. While the error detection and error correction mechanisms would be similar, the configuration and signalling would be different. For example, there is no need to signal between the RNC and the NodeB, and the RRC signalling between the RNC and UE would be handled by RRC signalling between the UE and eNodeB.

Indeed, the technology fully encompasses other embodiments which may become apparent to those skilled in the art. Reference to an element in the singular is not intended to mean "one and only one" unless explicitly so stated, but rather "one or more." Moreover, it is not necessary for a device or method to address each and every problem sought to be solved by the described technology for it to be encompassed hereby.

In the following, examples of the present disclosure are presented.

### Examples

1. A method of operating a network node (8) in a communication network (2), the communication network comprising a mobile device (14), a first base station (4) and a second base station (6), the first base station having a lower transmission power than the second base station and being located within the coverage area of the second base station, the mobile device being located within an imbalanced region between the first base station and the second base station and being served by the first base station, the method in the network node comprising:
   configuring (101) the mobile device, the first base station and the second base station such that the mobile device transmits uplink data to the first base station, and the mobile device receives downlink data only from the second base station.
2. A method as in example 1, wherein the step of configuring (101) comprises:
   receiving a measurement report from the mobile device; and
   processing the measurements in the measurement report to determine if the mobile device is at a location where it would be better to provide the downlink data from the second base station than the first base station.
3. A method as in example 1, wherein the step of configuring (101) comprises:
   receiving an indication from the mobile device that the mobile device is at a location where it would be better to provide the downlink data from the second base station than the first base station.
4. A method as in example 1, 2 or 3, wherein the step of configuring (101) comprises:
   sending a signal to the mobile device indicating that the second base station is being configured to transmit downlink data to the mobile device.
5. A method as in any preceding example, wherein the step of configuring (101) comprises:
   transmitting information about the mobile device to the second base station to enable the second base station to synchronise with transmissions from the mobile device.
6. A method as in any preceding example, the method further comprising the step of:
   receiving (103) uplink data from the mobile device via the first base station.
7. A method as in any preceding example, the method further comprising the step of:
   transmitting (103) downlink data that is to be transmitted to the mobile device only to the second base station.
8. A network node (8) for use in a communication network (2), the communication network comprising a mobile device (14), a first base station (4) and a second base station (6), the first base station having a lower transmission power than the second base station and being located within the coverage area of the second base station, the network node comprising:
   a processing module (50) that controls the operation of the network node; and
   circuitry (52) for allowing the network node to communicate with the first base station and the second base station;
   wherein the processing module and circuitry are arranged to configure the mobile device, the first base station and the second base station such that the mobile device transmits uplink data to the first base station and the mobile device receives downlink data only from the second base station when the mobile device is located within an imbalanced region between the first base station and the second base station and the mobile device is being served by the first base station.
9. A method of operating a mobile device (14) in a communication network (2), the communication network comprising a first base station (4), a second base station (6) and a network node (8), the first base station having a lower transmission power than the second base station and being located within the coverage area of the second base station, the mobile device being located within an imbalanced region between the first base station and the second base station and being served by the first base station, the method in the mobile device comprising:
   configuring (111) the mobile device such that the mobile device transmits uplink data to the first base station, and the mobile device receives downlink data only from the second base station.
10. A mobile device (14) for use in a communication network (2), the communication network comprising a first base station (4), a second base station (6) and a network node (8), the first base station having a lower transmission power than the second base station and being located within the coverage area of the second base station, the mobile device comprising:
   a processing module (30) that controls the operation of the mobile device; and
   a transceiver module (32) for allowing the mobile device to communicate with the first base station, the second base station and the network node via the first base station and/or second base station;
   wherein the processing module and transceiver module are arranged to configure the mobile device to transmit uplink data to the first base station and receive downlink data only from the second base station when the mobile device is located within an imbalanced region between the first base station and the second base station and the mobile device is being served by the first base station.
11. A mobile device (14) as in example 10, wherein the processing module (30) and transceiver module (32) are arranged to transmit a measurement report to the network node.
12. A mobile device (14) as in example 10, wherein the processing module (30) and transceiver module (32) are arranged to transmit an indication to the network node that the mobile device is at a location where it would be better to provide the downlink data from the second base station than the first base station.
13. A mobile device (14) as in example 10, 11 or 12, wherein, in configuring the mobile device to transmit uplink data to the first base station and receive downlink data only from the second base station, the processing module (30) and transceiver module (32) are arranged to receive a signal from the network node indicating that the second base station is being configured to transmit downlink data to the mobile device.
14. A mobile device (14) as in any of examples 10 to 13, wherein, in configuring the mobile device to transmit uplink data to the first base station and receive downlink data only from the second base station, the processing module (30) and transceiver module (32) are arranged to increase the power of an uplink control channel transmitted by the mobile device.
15. A mobile device (14) as in any of examples 10 to 14, wherein, in configuring the mobile device to transmit uplink data to the first base station and receive downlink data only from the second base station, the processing module (30) and transceiver module (32) are arranged to receive a signal instructing the mobile device to monitor a downlink control channel transmitted by the second base station; and to monitor the downlink control channel transmitted by the second base station.
16. A mobile device (14) as in example 15, wherein the processing module (30) and transceiver module (32) are arranged to monitor the downlink control channel for transmission power control commands from the second base station.
17. A mobile device (14) as in example 15 or 16, wherein the processing module (30) and transceiver module (32) are arranged to monitor the downlink control channel to determine if the mobile device is scheduled to receive downlink data from the second base station.
18. A mobile device (14) as in any of examples 10 to 17, wherein the processing module (30) and transceiver module (32) are further arranged to transmit an indication of the quality of signals transmitted by the second base station and/or acknowledgements in respect of downlink data received from the second base station to the second base station.
19. A mobile device (14)as in any of examples 10 to 18, wherein the processing module (30) and transceiver module (32) are arranged to configure the mobile device to transmit uplink data to the first base station and receive downlink data only from the second base station when the mobile device is in a CELL_FACH or CELL_DCH mode.
20. A method of operating a second base station (6) in a communication network (2), the communication network comprising a mobile device (14), a first base station (4) and a network node (8), the first base station having a lower transmission power than the second base station and being located within the coverage area of the second base station, the mobile device being located within an imbalanced region between the first base station and the second base station and being served by the first base station, the method in the second base station comprising:
   configuring (121) the second base station such that the second base station transmits downlink data to the mobile device.
21. A method as in example 20, wherein the second base station is configured to transmit downlink data to the mobile device while the mobile device is configured to transmit uplink data to the first base station.
22. A method as in example 20 or 21, wherein the step of configuring (121) comprises:
   acquiring synchronisation with uplink transmissions from the mobile device.
23. A method as in example 22, wherein the step of configuring (121) further comprises:
   receiving information for the mobile device from the network node; and
   using the received information to acquire synchronisation with the uplink transmissions from the mobile device.
24. A method as in example 22 or 23 wherein the step of configuring (121) further comprises:
   receiving downlink timing information for the second base station as measured by the mobile device from the network node.
25. A method as in example 24, wherein the step of acquiring synchronisation comprises:
   determining a nominal uplink frame boundary for a control channel from the mobile device using the received downlink timing information.
26. A method as in example 25, wherein the step of acquiring synchronisation further comprises:
   searching for an actual uplink frame boundary in a window around the determined nominal frame boundary, the size of the window being determined based on information on the range of propagation delays for mobile devices in the imbalanced region.
27. A method as in any of examples 20 to 26, the method further comprising the step of:
   transmitting a downlink control channel to the mobile device.
28. A method as in example 27, wherein the downlink control channel includes transmission power control commands for the mobile device.
29. A method as in any of examples 20 to 28, the method further comprising:
   receiving an indication of the quality of signals transmitted by the second base station and/or acknowledgements in respect of downlink data received from the second base station from the mobile device.
30. A method as in any of examples 20 to 29, wherein, prior to the step of configuring, the second base station is not included in an active set of the mobile device.
31. A second base station (6) for use in a communication network (2), the communication network comprising a mobile device (14), a first base station (4) and a network node (8), the second base station comprising:
   a processing module (40) that controls the operation of the second base station;
   circuitry (48) for allowing the second base station to communicate with the network node; and
   a transceiver module (42) for allowing the second base station to communicate with the mobile device;
   wherein the processing module, circuitry and transceiver module are arranged to configure the second base station such that the second base station transmits downlink data to the mobile device in the event that the first base station has a lower transmission power than the second base station, the first base station is located within the coverage area of the second base station and the mobile device is located within an imbalanced region between the first base station and the second base station, with the mobile device being served by the first base station.
32. A computer program product having computer readable instructions embodied therein, the computer program instructions being configured such that, on execution by a computer or suitable microprocessor, the computer or suitable microprocessor performs the method as in any of examples 1 to 7, 9 and 20-30.

## Claims

1. A method of operating a network node (8) in a communication network (2), the communication network comprising a mobile device (14), a first base station (4) and a second base station (6), the first base station having a lower transmission power than the second base station and being located within the coverage area of the second base station, the mobile device being located within an imbalanced region between the first base station and the second base station and being served by the first base station, the method in the network node comprising:
configuring (101) the mobile device, the first base station and the second base station such that the mobile device transmits uplink data to the first base station, and the mobile device receives downlink data only from the second base station, wherein, prior to the step of configuring, the second base station is not included in an active set of the mobile device.

2. A method as claimed in claim 1, wherein the step of configuring (101) comprises:
receiving a measurement report from the mobile device; and
processing measurements in the measurement report to determine if the mobile device is at a location within the imbalanced region.

3. A method as claimed in claim 1, wherein the step of configuring (101) comprises:
receiving an indication from the mobile device that the mobile device is at a location within the imbalanced region.

4. A method as claimed in claim 1, 2 or 3, wherein the step of configuring (101) comprises:
sending a signal to the mobile device indicating that the second base station is being configured to transmit downlink data to the mobile device,
transmitting information about the mobile device to the second base station to enable the second base station to synchronise with transmissions from the mobile device.

5. A method as claimed in any preceding claim, the method further comprising the step of:
receiving (103) uplink data from the mobile device via the first base station; and
transmitting (103) downlink data that is to be transmitted to the mobile device only to the second base station.

6. A network node (8) for use in a communication network (2), the communication network comprising a mobile device (14), a first base station (4) and a second base station (6), the first base station having a lower transmission power than the second base station and being located within the coverage area of the second base station, the network node comprising:
a processing module (50) that controls the operation of the network node; and
circuitry (52) for allowing the network node to communicate with the first base station and the second base station;
wherein the processing module and circuitry are arranged to configure the mobile device, the first base station and the second base station such that the mobile device transmits uplink data to the first base station and the mobile device receives downlink data only from the second base station when the mobile device is located within an imbalanced region between the first base station and the second base station and the mobile device is being served by the first base station, and the second base station is not included in an active set of the mobile device prior to configuring.

7. A method of operating a mobile device (14) in a communication network (2), the communication network comprising a first base station (4), a second base station (6) and a network node (8), the first base station having a lower transmission power than the second base station and being located within the coverage area of the second base station, the mobile device being located within an imbalanced region between the first base station and the second base station and being served by the first base station, the method in the mobile device comprising:
configuring (111) the mobile device such that the mobile device transmits uplink data to the first base station, and the mobile device receives downlink data only from the second base station, wherein, prior to the step of configuring, the second base station is not included in an active set of the mobile device.

8. A mobile device (14) for use in a communication network (2), the communication network comprising a first base station (4), a second base station (6) and a network node (8), the first base station having a lower transmission power than the second base station and being located within the coverage area of the second base station, the mobile device comprising:
a processing module (30) that controls the operation of the mobile device; and
a transceiver module (32) for allowing the mobile device to communicate with the first base station, the second base station and the network node via the first base station and/or second base station;
wherein the processing module and transceiver module are arranged to configure the mobile device to transmit uplink data to the first base station and receive downlink data only from the second base station when the mobile device is located within an imbalanced region between the first base station and the second base station and the mobile device is being served by the first base station, and the second base station is not included in an active set of the mobile device prior to configuring.

9. A mobile device (14) as claimed in claim 8, wherein the processing module (30) and transceiver module (32) are arranged to transmit a measurement report to the network node.

10. A mobile device (14) as claimed in claim 8, wherein the processing module (30) and transceiver module (32) are arranged to transmit an indication to the network node that the mobile device is at a location within the imbalanced region.

11. A mobile device (14) as claimed in claim 8, 9 or 10, wherein, in configuring the mobile device to transmit uplink data to the first base station and receive downlink data only from the second base station, the processing module (30) and transceiver module (32) are arranged to:
receive a signal from the network node indicating that the second base station is being configured to transmit downlink data to the mobile device;
increase the power of an uplink control channel transmitted by the mobile device;
receive a signal instructing the mobile device to monitor a downlink control channel transmitted by the second base station; and
monitor the downlink control channel transmitted by the second base station.

12. A mobile device (14) as claimed in claim 11, wherein the processing module (30) and transceiver module (32) are arranged to:
monitor the downlink control channel for transmission power control commands from the second base station; and
monitor the downlink control channel to determine if the mobile device is scheduled to receive downlink data from the second base station.

13. A mobile device (14) as claimed in any of claims 8 to 12, wherein the processing module (30) and transceiver module (32) are further arranged to:
transmit an indication of the quality of signals transmitted by the second base station and/or acknowledgements in respect of downlink data received from the second base station to the second base station; and
configure the mobile device to transmit uplink data to the first base station and receive downlink data only from the second base station when the mobile device is in a CELL_FACH or CELL_DCH mode.

14. A method of operating a second base station (6) in a communication network (2), the communication network comprising a mobile device (14), a first base station (4) and a network node (8), the first base station having a lower transmission power than the second base station and being located within the coverage area of the second base station, the mobile device being located within an imbalanced region between the first base station and the second base station and being served by the first base station, the method in the second base station comprising:
configuring (121) the second base station such that the second base station transmits downlink data to the mobile device, wherein, prior to the step of configuring, the second base station is not included in an active set of the mobile device.

15. A second base station (6) for use in a communication network (2), the communication network comprising a mobile device (14), a first base station (4) and a network node (8), the second base station comprising:
a processing module (40) that controls the operation of the second base station;
circuitry (48) for allowing the second base station to communicate with the network node; and
a transceiver module (42) for allowing the second base station to communicate with the mobile device;
wherein the processing module, circuitry and transceiver module are arranged to configure the second base station such that the second base station transmits downlink data to the mobile device in the event that the first base station has a lower transmission power than the second base station, the first base station is located within the coverage area of the second base station and the mobile device is located within an imbalanced region between the first base station and the second base station, with the mobile device being served by the first base station, and the second base station is not included in an active set of the mobile device prior to configuring.

## Patentansprüche

1. Verfahren zum Betreiben eines Netzwerkknotens (8) in einem Kommunikationsnetzwerk (2), das Kommunikationsnetzwerk umfassend eine Mobilvorrichtung (14), eine erste Basisstation (4) und eine zweite Basisstation (6), wobei die erste Basisstation eine geringere Sendeleistung als die zweite Basisstation aufweist und sich innerhalb des Abdeckungsbereichs der zweiten Basisstation befindet, wobei sich die Mobilvorrichtung innerhalb einer ungleichmäßigen Region zwischen der ersten Basisstation und der zweiten Basisstation befindet und durch die erste Basisstation versorgt wird, das Verfahren im Netzwerkknoten umfassend:
das Konfigurieren (101) der Mobilvorrichtung, der ersten Basisstation und der zweiten Basisstation, so dass die Mobilvorrichtung Uplink-Daten an die erste Basisstation sendet und die Mobilvorrichtung Downlink-Daten nur von der zweiten Basisstation empfängt, wobei vor dem Schritt des Konfigurierens die zweite Basisstation nicht in einem aktiven Satz der Mobilvorrichtung enthalten ist.

2. Verfahren nach Anspruch 1, wobei der Schritt des Konfigurierens (101) Folgendes umfasst:
das Empfangen eines Messberichts von der Mobilvorrichtung; und
das Verarbeiten von Messungen in dem Messbericht, um zu bestimmen, ob sich die Mobilvorrichtung an einem Ort innerhalb der ungleichmäßigen Region befindet.

3. Verfahren nach Anspruch 1, wobei der Schritt des Konfigurierens (101) Folgendes umfasst:
das Empfangen einer Meldung von der Mobilvorrichtung, dass sich die Mobilvorrichtung an einem Ort innerhalb der ungleichmäßigen Region befindet.

4. Verfahren nach Anspruch 1, 2 oder 3, wobei der Schritt des Konfigurierens (101) Folgendes umfasst:
das Senden eines Signals zur Mobilvorrichtung, das anzeigt, dass die zweite Basisstation so konfiguriert wird, dass Downlink-Daten an die Mobilvorrichtung gesendet werden,
das Senden von Informationen über die Mobilvorrichtung an die zweite Basisstation, um es der zweiten Basisstation zu ermöglichen, sich mit Übertragungen von der Mobilvorrichtung zu synchronisieren.

5. Verfahren nach einem der vorhergehenden Ansprüche, wobei das Verfahren ferner den folgenden Schritt umfasst:
das Empfangen (103) von Uplink-Daten von der Mobilvorrichtung über die erste Basisstation; und
das Senden (103) von Downlink-Daten, die an die Mobilvorrichtung gesendet werden sollen, nur an die zweite Basisstation.

6. Netzwerkknoten (8) zur Verwendung in einem Kommunikationsnetzwerk (2), das Kommunikationsnetzwerk umfassend eine Mobilvorrichtung (14), eine erste Basisstation (4) und eine zweite Basisstation (6), wobei die erste Basisstation eine geringere Sendeleistung als die zweite Basisstation aufweist und sich innerhalb des Abdeckungsbereichs der zweiten Basisstation befindet, der Netzwerkknoten umfassend:
ein Verarbeitungsmodul (50), das den Betrieb des Netzwerkknoten steuert; und
Schaltungen (52), um es dem Netzwerkknoten zu ermöglichen, mit der ersten Basisstation und der zweiten Basisstation zu kommunizieren;
wobei das Verarbeitungsmodul und die Schaltungen so angeordnet sind, dass die Mobilvorrichtung, die erste Basisstation und die zweite Basisstation so konfiguriert werden, dass die Mobilvorrichtung Uplink-Daten an die erste Basisstation sendet und die Mobilvorrichtung Downlink-Daten nur von der zweiten Basisstation empfängt, wenn sich die Mobilvorrichtung innerhalb einer ungleichmäßigen Region zwischen der ersten Basisstation und der zweiten Basisstation befindet und die Mobilvorrichtung durch die erste Basisstation versorgt wird, und die zweite Basisstation vor dem Konfigurieren nicht in einem aktiven Satz der Mobilvorrichtung enthalten ist.

7. Verfahren zum Betreiben einer Mobilvorrichtung (14) in einem Kommunikationsnetzwerk (2), das Kommunikationsnetzwerk umfassend eine erste Basisstation (4), eine zweite Basisstation (6) und einen Netzwerkknoten (8), wobei die erste Basisstation eine geringere Sendeleistung als die zweite Basisstation aufweist und sich innerhalb des Abdeckungsbereichs der zweiten Basisstation befindet, wobei sich die Mobilvorrichtung innerhalb einer ungleichmäßigen Region zwischen der ersten Basisstation und der zweiten Basisstation befindet und durch die erste Basisstation versorgt wird, das Verfahren in der Mobilvorrichtung umfassend:
das Konfigurieren (111) der Mobilvorrichtung, so dass die Mobilvorrichtung Uplink-Daten an die erste Basisstation sendet und die Mobilvorrichtung Downlink-Daten nur von der zweiten Basisstation empfängt, wobei vor dem Schritt des Konfigurierens die zweite Basisstation nicht in einem aktiven Satz der Mobilvorrichtung enthalten ist.

8. Mobilvorrichtung (14) zur Verwendung in einem Kommunikationsnetzwerk (2), das Kommunikationsnetzwerk umfassend eine erste Basisstation (4), eine zweite Basisstation (6) und einen Netzwerkknoten (8), wobei die erste Basisstation eine geringere Sendeleistung als die zweite Basisstation aufweist und sich innerhalb des Abdeckungsbereichs der zweiten Basisstation befindet, die Mobilvorrichtung umfassend:
ein Verarbeitungsmodul (30), das den Betrieb der Mobilvorrichtung steuert; und
ein Sender-Empfänger-Modul (32), um es der Mobilvorrichtung zu ermöglichen, mit der ersten Basisstation, der zweiten Basisstation und dem Netzwerkknoten über die erste Basisstation und/oder zweite Basisstation zu kommunizieren;
wobei das Verarbeitungsmodul und das Sender-Empfänger-Modul so angeordnet sind, dass die Mobilvorrichtung so konfiguriert wird, dass sie Uplink-Daten an die erste Basisstation sendet und Downlink-Daten nur von der zweiten Basisstation empfängt, wenn sich die Mobilvorrichtung innerhalb einer ungleichmäßigen Region zwischen der ersten Basisstation und der zweiten Basisstation befindet und die Mobilvorrichtung durch die erste Basisstation versorgt wird, und die zweite Basisstation vor dem Konfigurieren nicht in einem aktiven Satz der Mobilvorrichtung enthalten ist.

9. Mobilvorrichtung (14) nach Anspruch 8, wobei das Verarbeitungsmodul (30) und Sender-Empfänger-Modul (32) so angeordnet sind, dass ein Messbericht an den Netzwerkknoten gesendet wird.

10. Mobilvorrichtung (14) nach Anspruch 8, wobei das Verarbeitungsmodul (30) und Sender-Empfänger-Modul (32) so angeordnet sind, dass eine Meldung an den Netzwerkknoten gesendet wird, dass sich die Mobilvorrichtung an einem Ort innerhalb der ungleichmäßigen Region befindet.

11. Mobilvorrichtung (14) nach Anspruch 8, 9 oder 10, wobei beim Konfigurieren der Mobilvorrichtung zum Senden von Uplink-Daten an die erste Basisstation und Empfangen von Downlink-Daten nur von der zweiten Basisstation das Verarbeitungsmodul (30) und Sender-Empfänger-Modul (32) für Folgendes angeordnet sind:
das Empfangen eines Signals vom Netzwerkknoten, das anzeigt, dass die zweite Basisstation so konfiguriert wird, dass Downlink-Daten an die Mobilvorrichtung gesendet werden,
das Erhöhen der Leistung eines Uplink-Steuerungskanals, der durch die Mobilvorrichtung gesendet wird;
das Empfangen eines Signals, das die Mobilvorrichtung anweist, einen Downlink-Steuerungskanal, der durch die zweite Basisstation gesendet wird, zu überwachen; und
das Überwachen des Downlink-Steuerungskanals, der durch die zweite Basisstation gesendet wird.

12. Mobilvorrichtung (14) nach Anspruch 11, wobei das Verarbeitungsmodul (30) und Sender-Empfänger-Modul (32) für Folgendes angeordnet sind:
das Überwachen des Downlink-Steuerungskanals für Sendeleistungssteuerungsbefehle von der zweiten Basisstation; und
das Überwachen des Downlink-Steuerungskanals, um zu bestimmen, ob die Mobilvorrichtung dazu vorgesehen ist, Downlink-Daten von der zweiten Basisstation zu empfangen.

13. Mobilvorrichtung (14) nach einem der Ansprüche 8 bis 12, wobei das Verarbeitungsmodul (30) und Sender-Empfänger-Modul (32) ferner für Folgendes angeordnet sind:
das Senden einer Meldung zur Qualität des Signals, das durch die zweite Basisstation gesendet wird, und/oder von Bestätigungen in Bezug auf Downlink-Daten, die von der zweiten Basisstation empfangen wurden, an die zweite Basisstation; und
das Konfigurieren der Mobilvorrichtung, um Uplink-Daten an die erste Basisstation zu senden und Downlink-Daten nur von der zweiten Basisstation zu empfangen, wenn die Mobilvorrichtung in einem CELL_FACH- oder CELL_DCH-Modus ist.

14. Verfahren zum Betreiben einer zweiten Basisstation (6) in einem Kommunikationsnetzwerk (2), das Kommunikationsnetzwerk umfassend eine Mobilvorrichtung (14), eine erste Basisstation (4) und einen Netzwerkknoten (8), wobei die erste Basisstation eine geringere Sendeleistung als die zweite Basisstation aufweist und sich innerhalb des Abdeckungsbereichs der zweiten Basisstation befindet, wobei sich die Mobilvorrichtung innerhalb einer ungleichmäßigen Region zwischen der ersten Basisstation und der zweiten Basisstation befindet und durch die erste Basisstation versorgt wird, das Verfahren in der zweiten Basisstation umfassend:
das Konfigurieren (121) der zweiten Basisstation, so dass die zweite Basisstation Downlink-Daten an die Mobilvorrichtung sendet, wobei vor dem Schritt des Konfigurierens die zweite Basisstation nicht in einem aktiven Satz der Mobilvorrichtung enthalten ist.

15. Zweite Basisstation (6) zur Verwendung in einem Kommunikationsnetzwerk (2), das Kommunikationsnetzwerk umfassend eine Mobilvorrichtung (14), eine erste Basisstation (4) und einen Netzwerkknoten (8), die zweite Basisstation umfassend:
ein Verarbeitungsmodul (40), das den Betrieb der zweiten Basisstation steuert;
Schaltungen (48), um es der zweiten Basisstation zu ermöglichen, mit dem Netzwerkknoten zu kommunizieren; und
ein Sender-Empfänger-Modul (42), um es der zweiten Basisstation zu ermöglichen, mit der Mobilvorrichtung zu kommunizieren;
wobei das Verarbeitungsmodul, die Schaltungen und das Sender-Empfänger-Modul so angeordnet sind, dass die zweite Basisstation so konfiguriert wird, dass die zweite Basisstation Downlink-Daten an die Mobilvorrichtung sendet, wenn die erste Basisstation eine geringere Sendeleistung als die zweite Basisstation hat, sich die erste Basisstation innerhalb des Abdeckungsbereichs der zweiten Basisstation befindet und sich die Mobilvorrichtung innerhalb einer ungleichmäßigen Region zwischen der ersten Basisstation und der zweiten Basisstation befindet, wobei die Mobilvorrichtung durch die erste Basisstation versorgt wird, und die zweite Basisstation vor dem Konfigurieren nicht in einem aktiven Satz der Mobilvorrichtung enthalten ist.

## Revendications

1. Procédé d'exploitation d'un noeud de réseau (8) dans un réseau de communication (2), le réseau de communication comprenant un dispositif mobile (14), une première station de base (4) et une seconde station de base (6), la première station de base ayant une puissance de transmission inférieure à celle de la seconde station de base et étant située dans la zone de couverture de la seconde station de base, le dispositif mobile étant situé dans une région de déséquilibre entre la première station de base et la seconde station de base et étant desservi par la première station de base, le procédé dans le noeud de réseau comprenant :
la configuration (101) du dispositif mobile, de la première station de base et de la seconde station de base de sorte que le dispositif mobile transmette des données sur la liaison montante à la première station de base, et que le dispositif mobile reçoive des données sur la liaison descendante uniquement en provenance de la seconde station de base, dans lequel, avant l'étape de configuration, la seconde station de base n'est pas incluse dans un ensemble actif du dispositif mobile.

2. Procédé selon la revendication 1, dans lequel l'étape de configuration (101) comprend :
la réception d'un rapport de mesure provenant du dispositif mobile ; et
le traitement de mesures du rapport de mesure pour déterminer si le dispositif mobile se trouve dans un endroit de la région de déséquilibre.

3. Procédé selon la revendication 1, dans lequel l'étape de configuration (101) comprend :
la réception d'une indication provenant du dispositif mobile selon laquelle le dispositif mobile se trouve dans un endroit de la région de déséquilibre.

4. Procédé selon la revendication 1, 2 ou 3, dans lequel l'étape de configuration (101) comprend :
l'envoi au dispositif mobile d'un signal indiquant que la seconde station de base est en cours de configuration pour transmettre des données sur la liaison descendante au dispositif mobile,
la transmission d'informations concernant le dispositif mobile à la seconde station de base pour permettre à la seconde station de base de se synchroniser avec les transmissions provenant du dispositif mobile.

5. Procédé selon une quelconque revendication précédente, le procédé comprenant en outre l'étape de :
réception (103) de données sur la liaison montante en provenance du dispositif mobile via la première station de base ; et
transmission (103) de données sur la liaison descendante qui doivent être transmises au dispositif mobile uniquement à la seconde station de base.

6. Noeud de réseau (8) destiné à être utilisé dans un réseau de communication (2), le réseau de communication comprenant un dispositif mobile (14), une première station de base (4) et une seconde station de base (6), la première station de base ayant une puissance de transmission inférieure à celle de la seconde station de base et étant située dans la zone de couverture de la seconde station de base, le noeud de réseau comprenant :
un module de traitement (50) qui contrôle le fonctionnement du noeud de réseau ; et
un ensemble de circuits (52) pour permettre au noeud de réseau de communiquer avec la première station de base et la seconde station de base ;
dans lequel le module de traitement et l'ensemble de circuits sont conçus pour configurer le dispositif mobile, la première station de base et la seconde station de base de sorte que le dispositif mobile transmette des données sur la liaison montante à la première station de base et que le dispositif mobile reçoive des données sur la liaison descendante en provenance de la seconde station de base uniquement, lorsque le dispositif mobile est situé dans une région de déséquilibre entre la première station de base et la seconde station de base et que le dispositif mobile est en train d'être desservi par la première station de base, et que la seconde station de base n'est pas incluse dans un ensemble actif du dispositif mobile avant la configuration.

7. Procédé d'exploitation d'un dispositif mobile (14) dans un réseau de communication (2), le réseau de communication comprenant une première station de base (4), une seconde station de base (6) et un noeud de réseau (8), la première station de base ayant une puissance de transmission inférieure à celle de la seconde station de base et étant située dans la zone de couverture de la seconde station de base, le dispositif mobile étant situé dans une région de déséquilibre entre la première station de base et la seconde station de base et étant desservi par la première station de base, le procédé dans le dispositif mobile comprenant :
la configuration (111) du dispositif mobile de sorte que le dispositif mobile transmette des données sur la liaison montante à la première station de base, et que le dispositif mobile reçoive des données sur la liaison descendante en provenance de la seconde station de base uniquement, dans lequel, avant l'étape de configuration, la seconde station de base n'est pas incluse dans un ensemble actif du dispositif mobile.

8. Dispositif mobile (14) destiné à être utilisé dans un réseau de communication (2), le réseau de communication comprenant une première station de base (4), une seconde station de base (6) et un noeud de réseau (8), la première station de base ayant une puissance de transmission inférieure à celle de la seconde station de base et étant située dans la zone de couverture de la seconde station de base, le dispositif mobile comprenant :
un module de traitement (30) qui contrôle le fonctionnement du dispositif mobile ; et
un module d'émetteur-récepteur (32) pour permettre au dispositif mobile de communiquer avec la première station de base, la seconde station de base et le noeud de réseau via la première station de base et/ou la seconde station de base ;
dans lequel le module de traitement et le module d'émetteur-récepteur sont conçus pour configurer le dispositif mobile de manière à transmettre des données sur la liaison montante à la première station de base et à recevoir des données sur la liaison descendante en provenance de la seconde station de base uniquement, lorsque le dispositif mobile est situé dans une région de déséquilibre entre la première station de base et la seconde station de base et que le dispositif mobile est en train d'être desservi par la première station de base, et que la seconde station de base n'est pas incluse dans un ensemble actif du dispositif mobile avant la configuration.

9. Dispositif mobile (14) selon la revendication 8, dans lequel le module de traitement (30) et le module d'émetteur-récepteur (32) sont conçus pour transmettre un rapport de mesure au noeud de réseau.

10. Dispositif mobile (14) selon la revendication 8, dans lequel le module de traitement (30) et le module d'émetteur-récepteur (32) sont conçus pour transmettre une indication au noeud de réseau selon laquelle le dispositif mobile se trouve dans un endroit de la région de déséquilibre.

11. Dispositif mobile (14) selon la revendication 8, 9 ou 10, dans lequel, dans la configuration du dispositif mobile pour transmettre des données sur la liaison montante à la première station de base et à recevoir des données sur la liaison descendante en provenance de la seconde station de base uniquement, le module de traitement (30) et le module d'émetteur-récepteur (32) sont conçus pour :
recevoir un signal provenant du noeud de réseau indiquant que la seconde station de base est en cours de configuration pour transmettre des données sur la liaison descendante au dispositif mobile ;
augmenter la puissance d'un canal de contrôle sur la liaison montante transmis par le dispositif mobile ;
recevoir un signal ordonnant au dispositif mobile de surveiller un canal de contrôle sur la liaison descendante transmis par la seconde station de base ; et
surveiller le canal de contrôle sur la liaison descendante transmis par la seconde station de base.

12. Dispositif mobile (14) selon la revendication 11, dans lequel le module de traitement (30) et le module d'émetteur-récepteur (32) sont conçus pour :
surveiller le canal de contrôle sur la liaison descendante pour les commandes de contrôle de la puissance de transmission provenant de la seconde station de base ; et
surveiller le canal de contrôle sur la liaison descendante pour déterminer si le dispositif mobile est programmé pour recevoir des données sur la liaison descendante en provenance de la seconde station de base.

13. Dispositif mobile (14) selon l'une quelconque des revendications 8 à 12, dans lequel le module de traitement (30) et le module d'émetteur- récepteur (32) sont en outre conçus pour :
transmettre une indication de la qualité des signaux transmis par la seconde station de base et/ou des accusés de réception en rapport avec les données sur la liaison descendante reçues de la seconde station de base à la seconde station de base ; et
configurer le dispositif mobile de manière transmettre des données sur la liaison montante à la première station de base et recevoir des données sur la liaison descendante en provenance de la seconde station de base uniquement, lorsque le dispositif mobile est en mode CELL_FACH ou CELL_DCH.

14. Procédé d'exploitation d'une seconde station de base (6) dans un réseau de communication (2), le réseau de communication comprenant un dispositif mobile (14), une première station de base (4) et un noeud de réseau (8), la première station de base ayant une puissance de transmission inférieure à celle de la seconde station de base et étant située dans la zone de couverture de la seconde station de base, le dispositif mobile étant situé dans une région de déséquilibre entre la première station de base et la seconde station de base et étant desservi par la première station de base, le procédé dans la seconde station de base comprenant :
la configuration (121) de la seconde station de base de sorte que la seconde station de base transmette des données sur la liaison descendante au dispositif mobile, dans lequel, avant l'étape de configuration, la seconde station de base n'est pas incluse dans un ensemble actif du dispositif mobile.

15. Seconde station de base (6) destinée à être utilisée dans un réseau de communication (2), le réseau de communication comprenant un dispositif mobile (14), une première station de base (4) et un noeud de réseau (8), la seconde station de base comprenant :
un module de traitement (40)qui contrôle le fonctionnement de la seconde station de base ;
un ensemble de circuits (48) pour permettre à la seconde station de base de communiquer avec le noeud de réseau ; et
un module d'émetteur-récepteur (42) pour permettre à la seconde station de base de communiquer avec le dispositif mobile ;
dans lequel le module de traitement, l'ensemble de circuits et le module d'émetteur-récepteur sont conçus pour configurer la seconde station de base de sorte que la seconde station de base transmette des données sur la liaison descendante au dispositif mobile si la première station de base a une puissance de transmission inférieure à celle de la seconde station de base, la première station de base est située dans la zone de couverture de la seconde station de base et le dispositif mobile est situé dans une région de déséquilibre entre la première station de base et la seconde station de base, le dispositif mobile étant desservi par la première station de base, et la seconde station de base n'est pas incluse dans un ensemble actif du dispositif mobile avant la configuration.
